# EUROPÄISCHE PATENTSCHRIFT

(11) **EP 0 452 624 B1**
(45) Veröffentlichungstag und Bekanntmachung des Hinweises auf die Patenterteilung: **27.10.1993**
(21) Anmeldenummer: 91101943.8
(22) Anmeldetag: 12.02.1991
(51) Int. Cl.: F27D 21/00, C21B 7/24, F27B 1/28, G01F 23/00

(54) **Senklot-Einrichtung zum Bestimmen der Schütthöhe in einem Schachtofen**
Plumbline device to determine the height of charge in a shaftfurnace
Dispositif à fil à plomb pour déterminer la hauteur de la charge dans un four à cuve

(30) Priorität: 21.04.1990 DE 4012816
(43) Veröffentlichungstag der Anmeldung: 23.10.1991
(73) Patentinhaber: MAN Gutehoffnungshütte Aktiengesellschaft, 46122 Oberhausen (DE)
(72) Erfinder: Herzog, Ingo, W-4235 Schermbeck (DE); Kämmerling, Bruno, Dipl.-Ing., W-4220 Dinslaken (DE)

(56) Entgegenhaltungen:
- GB-A- 358 579
- US-A- 1 917 478

## Beschreibung

Die Erfindung betrifft eine Senklot-Einrichtung zum Bestimmen der Schütthöhe in einem Schachtofen mit einem hydraulischen Antrieb einer in einem gasdichten Gehäuse angeordneten Wicklungstrommel zum Ab- und Aufwickeln eines Seiles oder einer Kette mit am Ende angebrachten Senklot, ferner mit einem von der Wicklungstrommel-Welle angetriebenen Wegaufnehmer.

Eine solche Einrichtung ist der Öffentlichkeit vor dem Prioritätstag dieser Patentanmeldung bekannt geworden.

Es ist bekannt, die Schütthöhe in einem Schachtofen mit mechanisierten Teufensonden zu überwachen. Dies geschieht in der Weise, daß mittels einer Wicklungstrommel ein Senklot an einem Seil oder einer Kette hängend von oben auf die Schüttungsoberfläche des Schachtofens hinabgelassen wird. Das Seil wickelt sich dabei von der Trommel, an deren Welle ein Wegaufnehmer angeschlossen ist, ab. Der Wegaufnehmer mißt die Winkeldrehung der Wicklungstrommel, aus der sich die Absenkteufe des Senklotes ergibt.

Zur Feststellung der genauen Teufe ist es notwendig, daß das Senklotseil auf der Wicklungstrommel stets straff gehalten wird, so daß das Senklot sich in aufrechter Stellung befindet und so exakt die Oberfläche der Schüttgutsäule des Schachtofens berührt. Ein Kippen oder Flachliegen des Senklotes hätte Falschmeldungen zur Folge. Ferner darf die Absinkgeschwindigkeit mit zunehmender Teufe und dadurch verursachten größeren Seilgewichtes nicht so groß werden, daß das Senklot in die Schachtofenschüttung eindringen kann.

Das Senklot soll bei absinkender Schütthöhe stets auf der Oberfläche der Schüttung verbleiben, d.h. es soll sich mit absinkender Möllersäule gleichmäßig mit absenken. Das Senklot darf den Kontakt mit der Möllersäule keinesfalls verlieren. Nur so ist eine kontinuierliche und genaue Messung des Schachtofen-Füllstandes möglich.

Bei unruhigem Ofengang ist ein Zuschütten des Senklotes mit Möllerstoffen nicht ganz auszuschließen. Deshalb ist bei Meßeinrichtungen des Standes der Technik grundsätzlich eine Betriebsweise bekannt, bei der im Abstand von 10 bis 20 Sekunden das Senklot um einen Betrag von beispielsweise 1 m hochgezogen und anschließend sofort wieder auf die Schüttung abgesenkt wird.

Als Antrieb für Meßeinrichtungen des Standes der Technik sind Elektromotoren oder schnellaufende Hydromotoren bekannt, die über ein Untersetzungsgetriebe die Wicklungstrommel der Senklot-Einrichtung antreiben.

Bei den bekannten Teufen-Meßeinrichtungen hat es sich als Nachteil herausgestellt, daß infolge des mit zunehmender Teufe (Absinken der Möllersäule) zunehmenden Seilgewichtes durch unpräzise Berücksichtigung der Gewichtsänderung die Meßgenauigkeit in Frage gestellt wird. Ferner werden bei den bekannten Einrichtungen die unterschiedlichen Reibungswiderstände bei der Umkehr der Drehrichtung der Wicklungstrommel (Abwärts- und Aufwärtsbewegung des am Seil hängenden Senklotes) nicht berücksichtigt. Das Halten des Senklotes bei Berührung der Schüttung in aufrechter Stellung gelingt trotz erheblichen Regelaufwandes nur in unvollkommenem Maße.

Es ist daher Aufgabe der Erfindung, Senklot-Meßeinrichtungen der vorbeschriebenen Gattung so zu verbessern, daß die zuvor geschilderten Nachteile vermieden werden und somit eine motorangetriebene Senklot-Meßeinrichtung zur Verfügung steht, mit deren Hilfe eine Schütthöhenmessung im Schachtofen mit höchster Meßgenauigkeit ermöglicht wird bei Minimierung der mechanischen Reibungswiderstände und unter strikter Berücksichtigung der Seilgewichts- oder Kettengewichtszunahme bei steigender Teufe, d.h. absinkender Möllersäule.

Diese Aufgabe wird durch die im kennzeichnenden Teil des Patentanspruchs 1 angegebenen Merkmale gelöst. Die Merkmale des abhängigen Unteranspruchs betreffen eine vorteilhafte Ausgestaltung der Meßeinrichtung.

Bei der Senklot-Meßeinrichtung nach der Erfindung wird die Wicklungstrommel von einem langsamlaufenden Hydromotor, d.h. einem Motor mit einer Drehzahl bis max. 50 Umdrehungen/min., ohne zwischengeschaltetes Untersetzungsgetriebe direkt angetrieben. Durch dieses Konzept wird eine Minimierung der Reibungswiderstände erreicht. Der von der Trommelwelle angetriebene Wegaufnehmer liefert ein der jeweiligen Teufe zugeordnetes Signal, welches unmittelbar ein Druckproportionalventil steuert. Auf diese Weise läßt sich die Gewichtszunahme des Seiles bzw. der Kette mit zunehmender Teufe exakt berücksichtigen. Der Hydromotor hält das der jeweiligen Teufe entsprechende Gegenmoment aufrecht.

Mit Hilfe der erfindungsgemäßen Anordnung läßt sich eine bislang nicht gekannte Feinfühligkeit und Meßgenauigkeit bei der Überwachung der Schütthöhe im Schachtofen erzielen. Beim Aufsetzen des Senklotes auf die Oberfläche der Möllersäule bleibt dieses stets in aufrechter Stellung, denn der langsamlaufende Hydromotor besitzt im Gegensatz zu einem Schnelläufer mit Untersetzungsgetriebe nur sehr kleine rotierende Massen und kann verzögerungslos gebremst werden. Der Gewichts-Haltedruck des Motors ist durch das Druckproportionalventil genau auf das Gewicht des Senklotes zuzüglich augenblicklichen Seilgewichts bemessen. Daher erzeugt die Senklotwinde gerade die Zugkraft, die zum Aufrechthalten des Senklotes erforderlich ist und die das Absinken des Senklotes mit absinkender Möllersäule sicherstellt.

Es sei besonders darauf hingewiesen, daß die erwähnte Feinfühligkeit der erfindungsgemäßen Anordnung erreicht wird, ohne daß mit Hilfe einer Regelung Ventile od. dgl. betätigt werden müssen.

Wird bei der erfindungsgemäßen Einrichtung ein Hydraulikölspeicher und eine Notstrombatterie (für die Schaltung des Wegeventils) verwendet, ist die Möglichkeit gegeben, auch während evtl. Störungen im Stromnetz die Teufenmessung über einen festgelegten Zeitraum aufrechtzuerhalten.

Ein Anwendungsbeispiel der Erfindung wird nachstehend anhand eines Schaubildes näher erläutert.

Die Wicklungstrommel (1) ist über eine Kupplung (2) mit dem Hydromotor (3), der eine integrierte Bremse (4) aufweist, verbunden. Durch den sich in beide Richtungen drehenden Hydromotor (3) wird das Seil (5), an dessen Ende das Senklot (6) hängt, auf die Wicklungstrommel (1) aufgewickelt bzw. von der Wicklungstrommel abgewickelt. Anstelle eines Seiles kann selbstverständlich auch eine Kette verwendet werden.

Der Druck zum Aufbau des durch den Hydromotor (3) aufzubringenden Drehmomentes wird so hoch gewählt, daß das "Gegendrehmoment" des Hydromotors (3) geringfügig unter dem Drehmoment der Wicklungstrommel (1), das durch den Seilzug aus Gewicht des Senklotes (6) zuzüglich Seilgewicht (5) erzeugt wird, liegt. Es ist somit sichergestellt, daß das Seil (5) ständig straffgehalten wird und die Wicklungstrommel (1) sofort zum Stillstand kommt, da das Senklot (6) auf das Möllergut aufsetzt und dadurch das Überschuß-Drehmoment durch das Gewicht des Senklotes zuzüglich dem Seilgewicht an der Wicklungstrommel (1) gegenüber dem Hydromotor-Drehmoment abgebaut wird.

Zum Absenken des Senklotes (6) in den Schachtofen wird über das Wegeventil (7) die Bremse (4) des Hydromotors (3) gelüftet. Gleichzeitig wird zur Überwindung des Losbrechmomentes der Wicklungstrommel (1) und des Hydromotors (3) der Hydromotor (3) über das Wegeventil (8) mit Drucköl aus dem Hydraulikölbehälter (16) in Richtung Absenken des Senklotes beaufschlagt. Nachdem sich die Wicklungstrommel (1) in Drehbewegung gesetzt hat, wird das Wegeventil (8) wieder in seine Ruhelage geschaltet. Über den Wegeaufnehmer (9) wird das Druckproportionalventil (10) entsprechend der jeweiligen Teufe so angesteuert, daß das Drehmoment des Hydromotors (3) geringfügig unter dem Drehmoment der Wicklungstrommel (1), erzeugt durch das augenblicklich in Arbeitsrichtung ziehende Senklot (6) zuzüglich Seilgewicht (5), liegt.

Um zu verhindern, daß das Senklot (6) nach erfolgtem Aufsetzen umkippt, wird zum Ausgleich von Leckölverlusten über das Wegeventil (11) ständig eine geringe Hydraulikölmenge aus dem Druckölkreis vor das Druckproportionalventil (10) geleitet. Dadurch wird auch bei stehendem Hydromotor (3) der der jeweiligen Teufe entsprechende "Gewichts-Haltedruck" (d.h. der Druck zum Aufrichten des Senklotes) aufrechterhalten. Die Absenkgeschwindigkeit des Senklotes (6) wird am Stromregelventil (12) und die Einspeisemenge am Ventil (13) eingestellt. Zum Heben des Senklotes (6) wird das Ventil (14) umgeschaltet, so daß der Hydromotor (3) seine Drehrichtung wechselt und dadurch die Wicklungstrommel (1) das Seil (5) auftrommelt. Über den Wegaufnehmer (9) wird bei Erreichen der oberen Ruhestellung (Parkstellung) über das Wegeventil (7) die Bremse (4) aufgelegt und die Wegeventile (11) und (14) werden in ihre Ruhestellung geschaltet. Das Wegeventil (11) wird aus dem Grunde in seine Ruhestellung geschaltet, damit während der Meßpausen (während der Ofenbegichtung) kein Drucköl verbraucht wird. Das Ventil (14) wird in seine Ruhestellung geschaltet, um das Absenken des Senklotes (6) vorzubereiten. Die Anhebegeschwindigkeit für das Senklot wird am Stromregelventil (15) eingestellt.

Bei Messung größerer Teufen kann das Stromregelventil (12) durch eine Bypass-Schaltung umgangen werden. Hierdurch ist es möglich, bei großen Wegen mit höheren Geschwindigkeiten zu fahren. Kurz vor Erreichen der Meßteufe wird dann auf Meß-Absenken umgeschaltet.

In dem Schaubild (Schaltschema) sind die Rückschlagventile mit (17) bezeichnet.

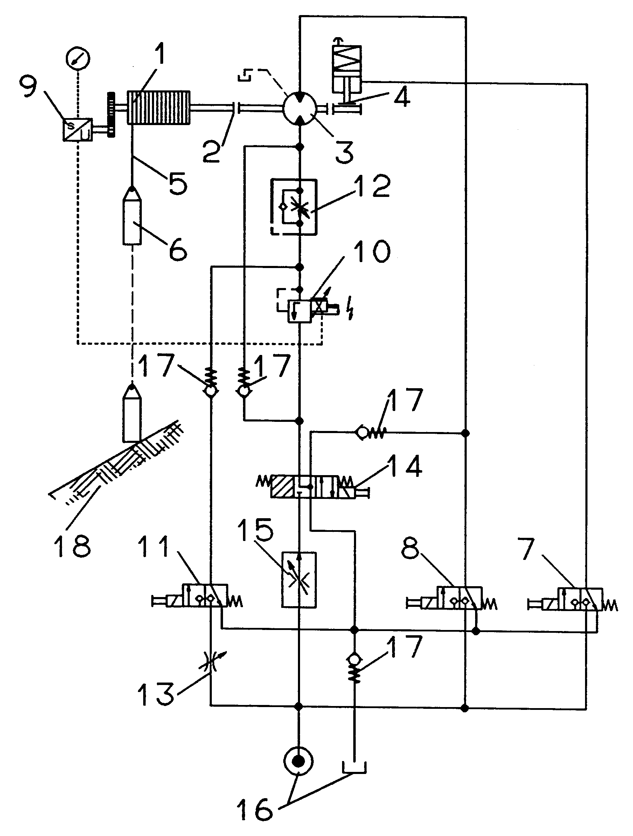

## Patentansprüche

1. Senklot-Einrichtung zum Bestimmen der Schütthöhe in einem Schachtofen mit einem hydraulischen Antrieb einer in einem gasdichten Gehäuse angeordneten Wicklungstrommel (1) zum Ab- und Aufwickeln eines Seiles oder einer Kette (5) mit am Ende angebrachten Senklot (6), ferner mit einem von der Wicklungstrommel-Welle angetriebenen Wegaufnehmer (9),
dadurch gekennzeichnet,
daß die Wicklungstrommel (1) ohne Zwischenschaltung eines Untersetzungsgetriebes von einem langsamlaufenden Hydromotor (3) angetrieben wird, daß vom Wegaufnehmer (9) ein der jeweiligen Teufe zugeordnetes Signal unmittelbar, d.h. ohne eine elektrische Regelung, auf ein Druckproportionalventil (10) gegeben wird und daß das Druckproportionalventil (10) dem Hydromotor (3) einen der jeweiligen Teufe zugeordneten Senklot-Haltedruck vorgibt.

2. Senklot-Einrichtung nach Anspruch 1,
dadurch gekennzeichnet,
daß das Senklot (6) in festzulegenden Zeitabständen, gesteuert von einem Wegeventil (14) um einen festzulegenden Längenbetrag aus der Meßposition angehoben und anschließend wieder in die Meßposition abgesenkt wird.

## Claims

1. Plumb bob device for determining the height of bed in a shaft furnace, comprising a hydraulic drive for a winding drum (1) arranged in a gastight housing for unwinding and winding a cable or a chain (5) with a plumb bob (6) fixed to its end, and further comprising a displacement transducer (9) driven by the winding drum shaft, characterised in that the winding drum (1) is driven without the interposition of reduction gearing by a low-speed hydromotor (3), that a signal associated with the respective depth is transmitted directly, i.e. without electrical control, to a pressure proportional valve (10) by the displacement transducer (9) and that the pressure proportional valve (10) gives the hydromotor (3) a plumb bob holding pressure associated with the respective depth.

2. Plumb bob device according to claim 1, characterised in that the plumb bob (6) is raised by a predetermined linear amount from the measuring position and is then lowered back into the measuring position at predetermined intervals controlled by a two-way valve (14).

## Revendications

1. Dispositif à fil à plomb pour déterminer la hauteur de déversement dans un four vertical avec un entraînement hydraulique d'un tambour d'enroulement (1) disposé dans un carter étanche aux gaz pour dérouler et enrouler un câble ou une chaîne (5) avec un plomb (6) accroché à l'extrémité, en outre avec un capteur de déplacement (9) entraîné par l'arbre du tambour d'enroulement, dispositif à fil à plomb, caractérisé en ce que le tambour d'enroulement (1) est entraîné par un moteur hydraulique tournant lentement sans interposition d'une boîte de démultiplication, en ce que l'on a un signal correspondant à la profondeur respective qui est directement envoyé par le capteur de déplacement (9), c'est-à-dire sans régulation électrique, à une vanne fonctionnant proportionnellement à la pression (10) et en ce que la vanne (10) délivre au moteur hydraulique (3) une pression d'arrêt du plomb du plomb correspondant à la profondeur respective.

2. Dispositif à fil à plomb selon la revendication 1, caractérisé en ce que le plomb (6) à des intervalles de temps déterminés, commandé par un distributeur (14) est soulevé d'une longueur à déterminer à partir de la position de mesure et est ensuite de nouveau abaissé à la position de mesure.
